# NEUE EUROPÄISCHE PATENTSCHRIFT

(11) **EP 2 242 664 B2**
(45) Veröffentlichungstag und Bekanntmachung des Hinweises auf die Entscheidung über den Einspruch: **21.03.2018**
(45) Hinweis auf die Patenterteilung: 17.10.2012
(21) Anmeldenummer: 08872321.8
(22) Anmeldetag: 21.11.2008
(51) Int. Cl.: B60L 15/20, H02P 29/02, B60W 50/04, B60L 3/04, B60L 3/00, B60L 11/00, B60W 10/08

(54) **VERFAHREN FÜR DIE STEUERUNG EINER ELEKTRISCHEN MASCHINE UND STEUEREINRICHTUNG**
METHOD FOR CONTROLLING AN ELECTRIC MACHINE AND CONTROL DEVICE
PROCÉDÉ DE COMMANDE D UNE MACHINE ÉLECTRIQUE, ET DISPOSITIF DE COMMANDE

(30) Priorität: 11.02.2008 DE 102008008536
(43) Veröffentlichungstag der Anmeldung: 27.10.2010
(73) Patentinhaber: Robert Bosch GmbH, 70442 Stuttgart (DE)
(72) Erfinder: FU, Chengxuan, 74199 Untergruppenbach (DE)
(86) Internationale Anmeldenummer: PCT/EP2008/065969
(87) Internationale Veröffentlichungsnummer: WO 2009/100789

(56) Entgegenhaltungen:
- EP-A- 0 768 203
- EP-A- 1 844 971
- WO-A1-2004/033245
- DE-A1- 4 231 359
- DE-A1- 10 041 788
- DE-A1- 10 155 128
- DE-A1- 10 160 348
- DE-A1- 10 242 605
- DE-A1-102005 040 786
- US-A1- 2003 193 310
- US-A1- 2004 046 519
- US-B1- 6 490 511

## Beschreibung

### Stand der Technik

Das gattungsbildende Dokument DE 100 41 788 offenbart ein Verfahren für die Steuerung einer elektrischen Maschine mit den Merkmalen des Oberbegriffs von Anspruch 1.

Die Erfindung betrifft ein Verfahren für die Steuerung einer elektrischen Maschine nach dem Oberbegriff des Anspruchs 1. Weiterhin betrifft die Erfindung eine Steuereinrichtung nach dem Oberbegriff des Anspruchs 7. Unter dem Begriff elektrische Maschine im Sinne der vorliegenden Erfindung ist der elektrische Antriebsmotor eines Elektrofahrzeugs oder der Elektromotor eines Hybridantriebs für ein Fahrzeug zu verstehen. Es sind bereits elektronische Motorsteuergeräte bekannt, die einen

Funktionsrechner und ein Überwachungsmodul umfassen. Der Funktionsrechner und das Überwachungsmodul überwachen sich dabei gegenseitig durch eine Frage-Antwort-Kommunikation. Der Funktionsrechner und das Überwachungsmodul bestehen üblicherweise aus getrennten elektronischen Schaltkreisen mit eigenen Frequenznormalen (Quarzen). Bei Erkennung eines Fehlers in der Frage-Antwort-Kommunikation können sowohl der Funktionsrechner als auch das Überwachungsmodul mit ihnen verbundene Leistungsendstufen über getrennte Abschaltpfade abschalten, so dass das gesamte Antriebssystem in einen sicheren Betriebszustand versetzt werden kann. Dieser ist beispielsweise dadurch gekennzeichnet, dass die Drosselklappe und die Einspritzventile geschlossen sind. Der Abschaltpfad wird einmal pro Fahrzyklus getestet, indem der Status der Leistungsendstufen über den SPI-BUS zurückgelesen wird. Damit soll sichergestellt werden, dass bei dem Auftreten eines Fehlers die Leistungsendstufen abgeschaltet werden können. Nun kann es jedoch vorkommen, dass nach dem Überprüfen des Abschaltpfads am Anfang eines Fahrzyklus der Abschaltmechanismus für die Leistungsendstufen defekt wird, zum Beispiel, wenn der Fahrzyklus sehr lang ist, weil der Nachlaufbetrieb immer unterbrochen wird. Falls der Test des Abschaltpfads am Ende eines Fahrzyklus, nämlich in dem Nachlaufbetrieb, also nach Klemme 15 des Bordnetzes, durchgeführt wird, kann es ebenfalls passieren, dass der Abschaltmechanismus bei dem nächsten Startvorgang nicht mehr funktioniert. Außerdem liefert der übliche Test eines Abschaltpfads, bei dem nur der Status einer Leistungsendstufe zurückgemeldet wird, nicht eine definitive Aussage, ob die Aktoren der Leistungsendstufe wirklich abgeschaltet werden können. Die zuvor beschriebene Problematik ist bei einem Fahrzeug mit Hybridantrieb oder bei einem Elektrofahrzeug von besonderer Bedeutung. Zunächst kann ein elektrischer Antrieb aufgrund einer kürzeren Verzögerungszeit viel schneller als ein Verbrennungsmotor ein Drehmoment aufbauen. Das Drehmoment kann auch negativ sein, so dass ein Elektrofahrzeug mit maximaler Beschleunigung rückwärts fahren kann, da bei einem Elektrofahrzeug üblicherweise weder eine Kupplung noch ein Getriebe mit Rückwärtsgang vorhanden sind. Stattdessen wird die Abtriebswelle der elektrischen Maschine hart mit dem Antriebsstrang und mit den Rädern verbunden. Deshalb ist ein sicheres Abschalten bei einem Elektrofahrzeug sehr wichtig. Weiterhin wird bei vielen Elektrofahrzeugen das gewünschte Drehmoment in einem Fahrzeugführungssteuergerät berechnet und über einen BUS, insbesondere den CAN-BUS, an das Antriebssteuergerät gesendet. Das Fahrzeugführungssteuergerät kann im Fehlerfall eine Anforderung zum Abschalten des Antriebs über eine andere Leitung, zum Beispiel ein Bus-System oder eine diskrete Leitung, an das Antriebssteuergerät weiterleiten. Das Antriebssteuergerät, dessen Funktionsrechner und Überwachungsmodul auch interne Abschaltpfade hat, empfängt die Anforderung zum Abschalten aus dem Fahrzeugführungsrechner und schaltet die Leistungsendstufen des elektrischen Antriebs ab. Dies bedeutet aber, dass der Abschaltmechanismus bei einer derartigen Konfiguration noch viel komplexer und damit fehleranfälliger ist als bei einem konventionellen Antrieb mit einem Verbrennungsmotor.

### Offenbarung der Erfindung

### Technische Aufgabe

Der Erfindung liegt die Aufgabe zugrunde, ein verbessertes Verfahren für die Steuerung einer elektrischen Maschine eines Elektrofahrzeugs anzugeben, das einen zuverlässigen Betrieb des Fahrzeugs ermöglicht und auch im Fehlerfall einen eindeutig sicheren Betriebszustand garantiert. Weiterhin liegt der Erfindung die Aufgabe zugrunde, ein verbessertes Steuergerät anzugeben.

### Technische Lösung

Diese Aufgaben werden durch ein Steuerverfahren mit den Merkmalen des Anspruchs 1 und durch ein Steuergerät mit den Merkmalen des Anspruchs 7 gelöst. Die Erfindung geht dabei von der Erkenntnis aus, dass im Fehlerfall nur durch eine sichere Trennung der elektrischen Maschine von ihrer Energieversorgung ein sicherer Betriebszustand des Fahrzeugs erreichbar ist.

### Vorteile der Erfindung

Bei dem erfindungsgemäß ausgebildeten Verfahren für die Steuerung einer elektrischen Maschine werden die Steuersignale für die Steuerung der elektrischen Maschine und zugleich der Betriebszustand der elektrischen Maschine erfasst. Durch eine Plausibilitätsprüfung wird überprüft, ob eine Übereinstimmung vorliegt. Bei einer Abweichung oder Nichtübereinstimmung wird die elektrische Maschine von der Energieversorgungseinrichtung getrennt. Auf diese Weise wird ein irregulärer Betriebszustand vermieden und ein sicherer Betriebszustand des Elektrofahrzeugs sichergestellt. Selbst wenn der normale Abschaltpfad versagt, kann damit ausgeschlossen werden, dass ein unerwünschtes Moment auf den Antriebsstrang des Fahrzeugs aufgebracht wird. Damit wird eine größtmögliche Sicherheit für ein mit einem elektrischen Antrieb ausgestattetes Fahrzeug erreicht.

Besonders vorteilhaft werden, zum Beispiel mittels geeigneter Sensoren, das Drehmoment und/oder die Drehzahl und/oder die Änderung der Drehzahl der elektrischen Maschine erfasst und auf Plausibilität mit einem von dem Steuergerät für die Fahrzeugführung erzeugten Abschaltsignal verglichen, da diese Messgrößen vergleichsweise leicht und zuverlässig erfasst werden können. Alternativ und oder zusätzlich können auch Betriebskenngrößen des Fahrzeugs selbst, wie insbesondere die Beschleunigung des Fahrzeugs, erfasst und einer Plausibilitätsprüfung unterzogen werden.

Um die Plausibilitätsprüfung durchzuführen, umfasst eine erfindungsgemäß ausgestaltete Steuereinrichtung vorteilhaft ein Überwachungsmodul, dem die Steuersignale für die elektrische Maschine, insbesondere auch die Abschaltsignale und weiterhin Signale zugeführt werden, die Betriebskenngrößen der elektrischen Maschine charakterisieren. Wird im Rahmen der erfindungsgemäßen Plausibilitätsprüfung ein irregulärer Betriebszustand der elektrischen Maschine festgestellt, beispielsweise ein Drehmoment trotz Vorliegen eines Abschaltsignals, dann wird die elektrische Maschine aus Sicherheitsgründen von ihrer Energieversorgungseinrichtung getrennt. Diese Trennung erfolgt vorteilhaft mit einer von dem Überwachungsmodul steuerbaren Schalteinrichtung, die den Strompfad zwischen der elektrischen Maschine und der Energieversorgungseinrichtung unterbricht.

Weitere Vorteile der Erfindung ergeben sich aus der folgenden Beschreibung, den Ansprüchen und der Zeichnung.

### Kurze Beschreibung der Zeichnungen

Eine beispielhafte Ausführungsform der Erfindung wird nachfolgend unter Bezug auf die Zeichnung näher erläutert. Dabei zeigt:
- Figur 1: ein Blockschaltbild einer Energieversorgungs- und Steuereinrichtung;
- Figur 2: ein beispielhaftes Blockschaltbild eines Überwachungsmoduls der Steuereinrichtung.

### Ausführungsformen der Erfindung

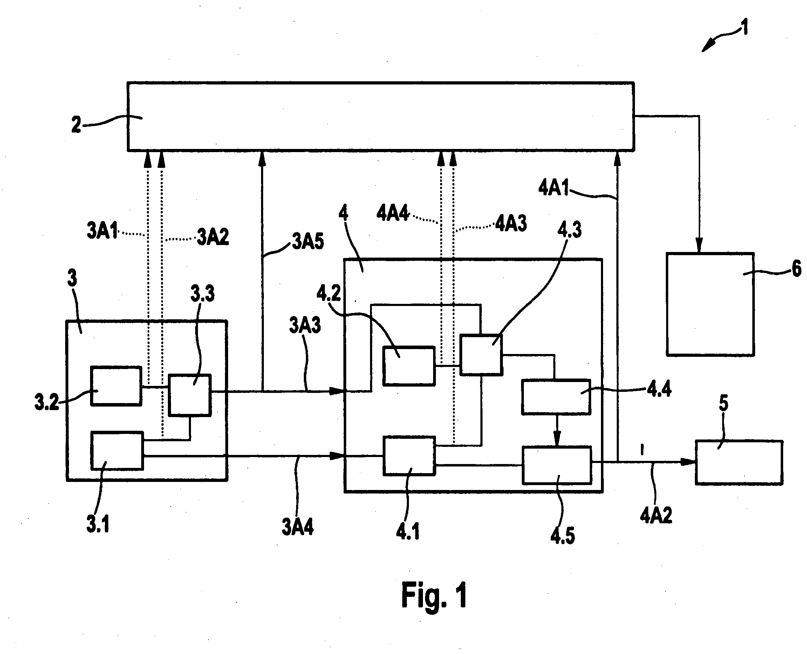

Figur 1 zeigt ein Blockschaltbild einer Energieversorgungseinrichtung und Steuereinrichtung 1 für eine elektrische Maschine 5. Die elektrische Maschine 5 ist als Antriebsmaschine für ein Elektrofahrzeug vorgesehen. Mit Bezugsziffer 3 ist ein Steuergerät für die Fahrzeugführung bezeichnet. Das Steuergerät 3 umfasst einen Funktionsrechner 3.1 und ein Überwachungsmodul 3.2. Der Funktionsrechner 3.1 und das Überwachungsmodul 3.2 sind ausgangsseitig mit Eingängen eines Logikglieds 3.3 verbunden, das beispielsweise eine OR-Funktion umfasst. Die mit Eingängen des Logikglieds 3.3 verbundenen Ausgänge des Funktionsrechners 3.1 und des Überwachungsmoduls 3.2 sind weiterhin über Ausgangsleitungen 3A1 und 3A2 mit einem Überwachungsmodul 2 verbunden. Eine intern mit dem Ausgang des Logikglieds 3.3 verbundene Ausgangsleitung 3A3 des Steuergeräts 3 ist mit dem Eingang eines weiteren Steuergeräts 4 verbunden. Eine intern mit einem Ausgang des Funktionsrechners 3.1 verbundene Ausgangsleitung 3A4 ist mit einem weiteren Eingang des Steuergeräts 4 verbunden. Die Ausgangsleitung 3A3 ist ebenfalls, über die Ausgangsleitung 3A5, mit dem Steuergerät 2 verbunden. Das Steuergerät 4 dient der Steuerung der elektrischen Maschine 5. Das Steuergerät 4 umfasst dazu einen Funktionsrechner 4.1, ein Überwachungsmodul 4.2, ein Logikglied 4.3, eine Schalteinrichtung 4.4 und eine Endstufe 4.5. Dabei ist ein Eingang des Funktionsrechners 4.1 mit der Ausgangsleitung 3A4 verbunden. Ein erster Eingangsanschluss des Logikglieds 4.3 ist mit der Ausgangsleitung 3A3 verbunden. Ein zweiter Eingangsanschluss des Logikglieds 4.3 ist mit dem Ausgang des Überwachungsmoduls 4.2 verbunden. Ein dritter Eingangsanschluss des Logikglieds 4.3 ist mit einem ersten Ausgang des Funktionsrechners 4.1 verbunden. Ein Ausgang des Logikglieds 4.3, das ebenfalls beispielsweise eine OR-Funktion umfasst, ist mit einem Eingang der Schalteinrichtung 4.4 verbunden. Ein zweiter Ausgang des Funktionsrechners 4.1 ist mit einem ersten Eingang einer die elektrische Maschine 5 steuernden Endstufe 4.5 verbunden. Ein zweiter Eingang der Endstufe 4.5 ist mit einem Ausgang der Schalteinrichtung 4.4 verbunden. Über Ausgangsleitungen 4A3, 4A4 sind das Überwachungsmodul 4.2 und der Funktionsrechner 4.1 mit dem Überwachungsmodul 2 verbunden. Der Ausgang der Endstufe 4.5 ist mit der elektrischen Maschine 5 verbunden. Mit Bezugsziffer 6 ist eine Energieversorgungseinrichtung bezeichnet, die insbesondere auch die elektrische Maschine 5 mit Energie versorgt. Beispielsweise handelt es sich bei der Energieversorgungseinrichtung 6 um eine in das Elektrofahrzeug fest eingebaute Batterie oder ein leicht austauschbares Batteriemodul. Denkbar sind auch weitere Alternativen, wie beispielsweise ein Stromgenerator oder eine Brennstoffzelle.

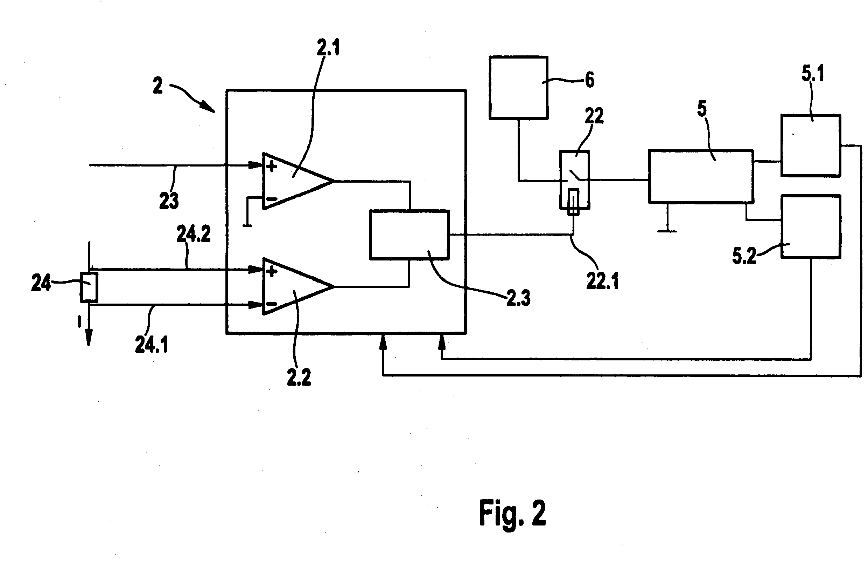

Das in Figur 2 beispielhaft dargestellte Blockschaltbild zeigt ein einfaches Ausführungsbeispiel eines Überwachungsmoduls 2 und die Steuerung der elektrischen Maschine 5 durch dieses Überwachungsmodul. Das Überwachungsmodul 2 umfasst zwei Komparatoren 2.1, 2.2 und ein vorzugsweise eine AND-Funktion umsetzendes Logikglied 2.3. Über den Eingang 23 kann einem Eingang des ersten Komparators 2.1 ein Anforderungssignal für das Abschalten der elektrischen Maschine 5 zugeleitet werden. Mit Bezugsziffer 24 ist ein Shuntwiderstand bezeichnet, der in den Stromkreis der elektrischen Maschine 5 eingeschaltet ist. Der an dem Shuntwiderstand 24 auftretende Spannungsabfall wird über Leitungen 24.1, 24.2 den Eingängen des zweiten Komparators 2.2 zugeführt. Die Ausgänge der Komparatoren 2.1 und 2.2 sind mit Eingängen des Logikglieds 2.3 verbunden. Ein Ausgang des Logikglieds 23 ist mit einem Steuereingang 22.1 einer Schalteinrichtung 22 verbunden. Die Schalteinrichtung 22 ist in der Verbindungsleitung zwischen der elektrischen Maschine 5 und der Energieversorgungseinrichtung 6 angeordnet und ermöglicht, durch Steuerung mittels des Überwachungsmoduls 2, eine Trennung der elektrischen Maschine 5 von der Energieversorgungseinrichtung 6. Abgesehen von der Erfassung des Stromflusses durch die elektrische Maschine 5 mit dem Shuntwiderstand 24 kann der jeweilige Betriebszustand der elektrischen Maschine 5 auch noch mit Sensoren 5.1, 5.2 erfasst werden. Bei dem Sensor 5.1 kann es sich beispielsweise um einen Drehzahlsensor handeln, der die Drehzahl oder eine Änderung der Drehzahl der elektrischen Maschine erfasst. Bei dem Sensor 5.2 kann es sich beispielsweise um einen mit der Welle der elektrischen Maschine verbundenen Drehmomentsensor, beispielsweise in Form eines Dehnungsmessstreifens, handeln, der das Drehmoment der elektrischen Maschine 5 erfasst.

In dem beispielhaft in Figur 1 dargestellten Ausführungsbeispiel einer erfindungsgemäß ausgestalteten Energieversorgungs- und Steuereinrichtung sind die Steuergeräte 3 und 4, zwecks besserer Übersicht, getrennt voneinander dargestellt. In einer Ausführungsvariante der Erfindung ist es denkbar, die Funktionen dieser Steuergeräte auch in einem einzigen Steuergerät zusammenzufassen. Dabei ist es dann auch möglich, anstelle von zwei Überwachungsmodulen 3.2 und 4.2 und zwei Funktionsrechnern 3.1 und 4.1 jeweils nur ein Überwachungsmodul und jeweils nur einen Funktionsrechner vorzusehen.

Im Folgenden wird das erfindungsgemäße Verfahren für die Steuerung der elektrischen Maschine 5 erläutert. Das Steuergerät 3 berechnet den Sollwert Mₛₒₗₗ des Drehmoments der elektrischen Maschine 5 und leitet ein entsprechendes Steuersignal über die Ausgangsleitung 3A4 dem Steuergerät 4 für die Steuerung der elektrischen Maschine 5 zu. Infolge dieses Steuersignals stellt das Steuergerät 4 einen entsprechenden Strom I für die elektrische Maschine 5 bereit (Ausgangsleitung 4A2). Das Überwachungsmodul 2 erfasst, beispielsweise über die Ausgangsleitung 3A5, eine von dem Steuergerät 3 übermittelte Anforderung zum Abschalten der elektrischen Maschine 5 und plausibilisiert diese mit der aktuellen Stromaufnahme der elektrischen Maschine 5. Falls die elektrische Maschine, trotz der Anforderung zum Abschalten, Strom aufnimmt und/oder ein Drehmoment erzeugt, wird aus Sicherheitsgründen die elektrische Maschine 5, durch Steuerung der Schalteinrichtung 22, von der Energieversorgungseinrichtung 6 getrennt. Alternativ und/oder zusätzlich können auch Betriebskenngrößen des Elektrofahrzeugs, wie beispielsweise dessen Beschleunigung, erfasst und durch das Überwachungsmodul 2 auf Plausibilität überprüft werden.

## Patentansprüche

1. Verfahren für die Steuerung einer elektrischen Maschine eines Elektrofahrzeugs, die von einer Energieversorgungseinrichtung (6) mit Energie versorgt wird,
wobei der Betriebszustand der elektrischen Maschine (5) erfasst wird und
wobei bei Auftreten eines irregulären Betriebszustands der elektrischen Maschine (5) die Verbindung zwischen der elektrischen Maschine (5) und der Energieversorgungseinrichtung (6) unterbrochen wird,
**dadurch gekennzeichnet,**
**dass** die Steuersignale für die Steuerung der electrischen Maschine (5) erfasst werden, und dass der erfasste Betriebszustand der elektrischen Maschine (5) auf Plausibilität mit den der elektrischen Maschine (5) zugeführten Steuersignalen überprüft wird.

2. Verfahren nach Anspruch 1, **dadurch gekennzeichnet, dass** das Drehmoment der elektrischen Maschine (5) erfasst und auf Plausibilität mit den der elektrischen Maschine (5) zugeführten Steuersignalen überprüft wird.

3. Verfahren nach einem der vorhergehenden Ansprüche, **dadurch gekennzeichnet, dass** die Drehzahl der elektrischen Maschine (5) erfasst und auf Plausibilität mit den der elektrischen Maschine (5) zugeführten Steuersignalen überprüft wird.

4. Verfahren nach einem der vorhergehenden Ansprüche, **dadurch gekennzeichnet, dass** die Drehzahländerung der elektrischen Maschine (5) erfasst und auf Plausibilität mit den der elektrischen Maschine (5) zugeführten Steuersignalen überprüft wird.

5. Verfahren für die Steuerung einer elektrischen Maschine eines Elektrofahrzeugs,
wobei der Betriebszustand des Elektrofahrzeugs erfasst wird,
und wobei bei Auftreten eines irregulären Betriebszustands des Elektrofahrzeugs die Verbindung zwischen der elektrischen Maschine (5) und einer Energieversorgungseinrichtung (6) unterbrochen wird,
**dadurch gekennzeichnet,**
**dass** die Steuersignale für die Steuerung der electrischen Maschine (5) erfasst werden, und dass der erfasste Betriebszustand des Elektrofahrzeugs auf Plausibilität mit den der elektrischen Maschine (5) zugeführten Steuersignalen überprüft wird.

6. Verfahren nach Anspruch 5, **dadurch gekennzeichnet, dass** die Beschleunigung des Elektrofahrzeugs erfasst und auf Plausibilität mit den der elektrischen Maschine (5) zugeführten Steuersignalen überprüft wird.

7. Steuereinrichtung für ein von einer elektrischen Maschine (5) angetriebenes Elektrofahrzeug wobei ein Überwachungsmodul (2) vorgesehen ist,
wobei dem Überwachungsmodul (2) zumindest die für die Steuerung der elektrischen Maschine (5) vorgesehenen Steuersignale zuführbar sind,
wobei dem Überwachungsmodul (2) weiterhin mindestens den Betriebszustand der elektrischen Maschine (5) repräsentierende Signale zuführbar sind,
**dadurch gekennzeichnet,**
**dass** das Überwachungsmodul (2) Mittel für die Plausibilitätsprüfung der ihm zugeführten Signale umfasst,
wobei das Überwachungsmodul zwei Komparatoren (2.1, 2.2) umfasst, wobei dem ersten Komparator (2.1) ein Anforderungssignal für das Abschalten der elektrischen Maschine (5) und dem zweiten Komparator der an dem Shuntwiderstand (24) anstehende Spannungsabfall zuführbar sind.

8. Steuereinrichtung nach Anspruch 7, **dadurch gekennzeichnet, dass** eine von dem Überwachungsmodul (2) steuerbare Schalteinrichtung (22) vorgesehen ist, mit der die elektrische Maschine (5) von der Energieversorgungseinrichtung(6) trennbar ist.

9. Steuereinrichtung nach Anspruch 7 oder 8, **dadurch gekennzeichnet, dass** in dem Stromkreis der elektrischen Maschine (5) ein Shuntwiderstand (24) für die Erfassung des durch die elektrische Maschine (5) fließenden Stroms angeordnet ist

10. Steuereinrichtung nach einem der Ansprüche 7 bis 9, **dadurch gekennzeichnet, dass** Sensoren (5.1, 5.2) für die Erfassung der Drehzahl und/oder der Drehzahländerung und/oder des Drehmoments der elektrischen Maschine (5) vorgesehen sind.

11. Steuereinrichtung nach einem der Ansprüche 7 bis 10, **dadurch gekennzeichnet, dass** die Ausgänge der Komparatoren (2.1, 2.2) mit Eingängen eines eine AND-Funktion umsetzenden Logikglieds (2.3) verbunden sind, dessen Ausgang mit dem Steuereingang (22.1) der Schalteinrichtung (22) verbunden ist

## Claims

1. Method for controlling an electric machine of an electric vehicle, which electric machine is supplied with energy by an energy supply device (6), wherein the operating state of the electric machine (5) is detected, and wherein when an irregular operating state of the electric machine (5) occurs the connection between the electric machine (5) and the energy supply device (6) is interrupted, **characterized in that** the control signals for the control of the electric machine (5) are detected, and **in that** the detected operating state of the electric machine (5) is checked for plausibility with the control signals fed to the electric machine (5) .

2. Method according to Claim 1, **characterized in that** the torque of the electric machine (5) is detected and is checked for plausibility with the control signals fed to the electric machine (5).

3. Method according to one of the preceding claims, **characterized in that** the rotational speed of the electric machine (5) is detected and is checked for plausibility with the control signals fed to the electric machine (5).

4. Method according to one of the preceding claims, **characterized in that** the change in the rotational speed of the electric machine (5) is detected and is checked for plausibility with the control signals fed to the electric machine (5).

5. Method for controlling an electric machine of an electric vehicle, wherein the operating state of the electric vehicle is detected, and wherein when an irregular operating state of the electric vehicle occurs the connection between the electric machine (5) and an energy supply device (6) is interrupted, **characterized in that** the control signals for the control of the electric machine (5) are detected, and **in that** the detected operating state of the electric vehicle is checked for plausibility with the control signals fed to the electric machine (5).

6. Method according to Claim 5, **characterized in that** the acceleration of the electric vehicle is detected and is checked for plausibility with the control signals fed to the electric machine (5).

7. Control device for an electric vehicle which is powered by an electric machine (5), wherein a monitoring module (2) is provided, wherein at least the control signals which are provided for the control of the electric machine (5) can be fed to the monitoring module (2), and wherein at least signals which represent the operating state of the electric machine (5) can also be fed to the monitoring module (2), **characterized in that** the monitoring module (2) comprises means for testing the plausibility of the signals fed to it, wherein the monitoring module comprises two comparators (2.1, 2.2), wherein a request signal for switching off the electric machine (5) can be fed to the first comparator (2.1), and the voltage drop which is present at the shunt resistor (24) can be fed to the second comparator.

8. Control device according to Claim 7, **characterized in that** a switching device (22) which can be controlled by the monitoring module (2) and with which the electric machine (5) can be disconnected from the energy supply device (6) is provided.

9. Control device according to Claim 7 or 8, **characterized in that** a shunt resistor (24) for detecting the current flowing through the electric machine (5) is arranged in the circuit of the electric machine (5).

10. Control device according to one of Claims 7 to 9, **characterized in that** sensors (5.1, 5.2) for detecting the rotational speed and/or the change in rotational speed and/or the torque of the electric machine (5) are provided.

11. Control device according to one of Claims 7 to 10, **characterized in that** the outputs of the comparators (2.1, 2.2) are connected to inputs of a logic element (2.3) which implements an AND function, the output of which logic element (2.3) is connected to the control input (22.1) of the switching device (22) .

## Revendications

1. Procédé de commande d'une machine électrique d'un véhicule électrique, ladite machine étant alimentée en énergie par un dispositif d'alimentation en énergie (6), l'état de fonctionnement de la machine électrique (5) étant détecté et la liaison entre la machine électrique (5) et le dispositif d'alimentation en énergie (6) étant interrompue en présence d'un état de fonctionnement anormal de la machine électrique (5), **caractérisé en ce que** les signaux de commande servant à commander la machine électrique (5) sont détectés et que l'état de fonctionnement détecté de la machine électrique (5) est contrôlé pour vérifier le caractère plausible des signaux de commande envoyés à la machine électrique (5).

2. Procédé selon la revendication 1, **caractérisé en ce que** le couple de rotation de la machine électrique (5) est détecté et contrôlé pour vérifier le caractère plausible des signaux de commande envoyés à la machine électrique (5).

3. Procédé selon l'une quelconque des revendications précédentes, **caractérisé en ce que** la vitesse de rotation de la machine électrique (5) est détectée et contrôlée pour vérifier le caractère plausible des signaux de commande envoyés à la machine électrique (5).

4. Procédé selon l'une quelconque des revendications précédentes, **caractérisé en ce que** la variation de vitesse de rotation de la machine électrique (5) est détectée et contrôlée pour vérifier le caractère plausible des signaux de commande envoyés à la machine électrique (5).

5. Procédé de commande d'une machine électrique d'un véhicule électrique, l'état de fonctionnement du véhicule électrique étant détecté et la liaison entre la machine électrique (5) et un dispositif d'alimentation en énergie (6) étant interrompue en présence d'un état de fonctionnement anormal du véhicule électrique, **caractérisé en ce que** les signaux de commande servant à commander la machine électrique (5) sont détectés et que l'état de fonctionnement détecté du véhicule électrique est contrôlé pour vérifier le caractère plausible des signaux de commande envoyés à la machine électrique (5).

6. Procédé selon la revendication 5, **caractérisé en ce que** l'accélération du véhicule électrique est détectée et contrôlée pour vérifier le caractère plausible des signaux de commande envoyés à la machine électrique (5).

7. Dispositif de commande destiné à un véhicule électrique entraîné par une machine électrique (5), un module de surveillance (2) étant prévu, au moins les signaux de commande prévus pour commander la machine électrique (5) pouvant être envoyés au module de surveillance (2), au moins les signaux représentant l'état de fonctionnement de la machine électrique (5) pouvant en outre être envoyés au module de surveillance (2), **caractérisé en ce que** le module de surveillance (2) comprend des moyens de vérification du caractère plausible des signaux lui étant envoyés, le module de surveillance comprenant deux comparateurs (2.1, 2.2), un signal de demande de déconnexion de la machine électrique (5) pouvant être envoyé au premier comparateur (2.1) et le reste de la tension présente au niveau de la résistance de type shunt (24) pouvant être amené au deuxième comparateur.

8. Dispositif de commande selon la revendication 7, **caractérisé en ce qu'**un dispositif de commutation (22) pouvant être commandé par le module de surveillance (2) est prévu et qu'il permet de séparer la machine électrique (5) du dispositif d'alimentation en énergie (6).

9. Dispositif de commande selon la revendications 7 ou 8, **caractérisé en ce qu'**une résistance de type shunt (24) est disposée dans le circuit électrique de la machine électrique (5) pour détecter le courant traversant la machine électrique (5).

10. Dispositif de commande selon l'une quelconque des revendications 7 à 9, **caractérisé en ce que** des capteurs (5.1, 5.2) sont prévus pour détecter la vitesse de rotation et/ou la variation de vitesse de rotation et/ou le couple de rotation de la machine électrique (5).

11. Dispositif de commande selon l'une quelconque des revendications 7 à 10, **caractérisé en ce que** les sorties des comparateurs (2.1, 2.2) sont reliées aux entrées d'un élément logique (2.3) convertissant une fonction ET, la sortie dudit élément logique étant quant à elle reliée à l'entrée (22.1) du dispositif de commutation (22).
